# EUROPÄISCHE PATENTSCHRIFT

(11) **EP 2 327 627 B1**
(45) Veröffentlichungstag und Bekanntmachung des Hinweises auf die Patenterteilung: **19.03.2014**
(21) Anmeldenummer: 10014699.2
(22) Anmeldetag: 17.11.2010
(51) Int. Cl.: B64D 15/04, B64D 29/00, B64D 33/02, B64D 33/10

(54) **Flugzeugenteisungsvorrichtung und Triebwerksgondel einer Flugzeuggasturbine mit Enteisungsvorrichtung**
Aircraft de-icing device and engine nacelle of an aircraft turbine with a de-icing device
Dispositif de dégivrage d'avions et nacelle d'une turbine à gaz d'un aéronef avec un dispositif de dégivrage

(30) Priorität: 26.11.2009 DE 102009055879
(43) Veröffentlichungstag der Anmeldung: 01.06.2011
(73) Patentinhaber: Rolls-Royce Deutschland Ltd & Co KG, 15827 Blankenfelde-Mahlow (DE)
(72) Erfinder: Todorovic, Predrag, 10437 Berlin (DE)
(74) Vertreter: Weber, Joachim

(56) Entgegenhaltungen:
- GB-A- 2 204 361
- US-A- 2 752 111
- US-A1- 2009 165 995

## Beschreibung

Die Erfindung bezieht sich auf eine Flugzeugenteisungsvorrichtung und eine Triebwerksgondel einer Fluggasturbine mit einer Enteisungsvorrichtung.

Aus dem Stand der Technik ist es bekannt, dass Einlaufbereiche einer Triebwerksgondel mit einer Enteisungsvorrichtung versehen werden müssen, um die Funktionalität einer Fluggasturbine sicherzustellen.

Der Stand der Technik zeigt Lösungen, bei welchen Bleed Air aus einem Hochdruckkompressor dem Einlaufbereich der Triebwerksgondel zugeleitet wird. Diese heiße Luft wird nach der Durchströmung der Triebwerksgondel in die Umgebung abgelassen und stellt somit einen Verlust für den Gesamtwirkungsgrad der Fluggasturbine dar. Ein derartiges System zeigt beispielsweise die US 3 981 466 A.

Eine weitere, aus dem Stand der Technik bekannte Variante besteht darin, heißes Triebwerksöl zur Erwärmung des Einlaufbereichs zu verwenden. Eine derartige Lösung beschreibt beispielsweise die US 2005/023 412 A.

Abgesehen von der Verschlechterung des Wirkungsgrades bei der Verwendung von Bleed Air aus dem Kompressor ergibt sich der Nachteil, dass die hohen Temperaturen sowohl der Bleed Air (Zapfluft) als auch des Triebwerksöls die Material-Lebensdauer des Einlaufbereichs der Triebwerksgondel günstig beeinflussen.

Aus der GB 2 204 361 A ist es vorbekannt, einen Ölkühler in der Nähe der Anströmkante anzuordnen. Das zu kühlende Öl durchströmt den Wärmetauscher und erwärmt damit die durch einen separaten Einlass dem Ölkühler zugeführte Luft. Diese wird durch eine Vielzahl von Leitungen gegen die Strömungsrichtung dem Anströmbereich der Triebwerksgondel zugeführt und verlässt die Triebwerksgondel zur Umgebung hin.

Die US 2,752,111 zeigt die Verwendung eines Ölkühlers, welcher stromab der Anströmkante hinter einem Spinner, welcher Propellerblätter verkleidet, angeordnet ist. Die aus dem Ölkühler austretende Luft wird durch Öffnungen zur Umgebung hin abgeleitet.

Die US 2009/0165995 A1 zeigt eine Anordnung eines Ölkühlers im Einlaufbereich der Verdichterströmung stromab eines Fans. Der Ölkühler gibt die Wärme an die Luftströmungen im Nebenstromkanal und im Verdichtereinlauf ab. Es erfolgt keine Enteisung eines vorderen Anströmbereichs der Triebwerksgondel.

Der Erfindung liegt die Aufgabe zugrunde, eine Flugzeugenteisungsvorrichtung sowie eine Triebwerksgondel einer Fluggasturbine mit einer Enteisungsvorrichtung zu schaffen, welche bei einfachem Aufbau und einfacher Anwendbarkeit einen hohen Wirkungsgrad aufweisen und eine lange Lebensdauer gewährleisten.

Erfindungsgemäß wird die Aufgabe durch die Merkmalskombinationen der unabhängigen Ansprüche 1 und 7 gelöst, die Unteransprüche zeigen weitere vorteilhafte Ausgestaltungen der Erfindung.

Erfindungsgemäß ist somit bei einer Triebwerksgondel vorgesehen, dass dem Einlaufbereich der Triebwerksgondel, nämlich einem ringförmigen Luftkanal, welcher in einer Einlauflippe ausgebildet ist, erwärmte Luft zugeführt wird, welche zuvor einen Ölkühler zur Kühlung des Triebwerksöls durchströmt hat. Dieser Ölkühler ist im Bereich der Triebwerksgondel angeordnet und wird mit Umgebungsluft beaufschlagt.

Die erfindungsgemäße Lösung schafft somit die Möglichkeit, in zuverlässiger Weise den Einlaufbereich der Triebwerksgondel zu erwärmen und Eisbildung zu verhindern. Hierdurch ist es nicht erforderlich, Zapfluft (Bleed Air) aus dem Kerntriebwerk zu entnehmen. Somit wird der Wirkungsgrad des Kerntriebwerks nicht herabgesetzt.

Die aus dem Stand der Technik bekannten Lösungen für Ölkühler verwenden üblicherweise Umgebungsluft, welche nach dem Durchströmen des Ölkühlers als erwärmte Luft der Umgebung zugeführt wird. Diese Luft stellt somit energetisch einen Verlust dar, da die aus dem Triebwerksöl abgeführte Wärme nicht genutzt werden kann.

Erfindungsgemäß wird somit sowohl die Entnahme von Zapfluft vermieden, als auch die ungenutzte Ableitung der erwärmten, aus dem Ölkühler austretenden Luft, vermieden.

Die erfindungsgemäße Ausgestaltung einer Triebwerksgondel eignet sich insbesondere für Turboprop-Antriebe, da die Luftströmung, welche die Triebwerksgondel umgibt, nicht beeinträchtigt wird.

Da die Triebwerksgondel so ausgebildet ist, dass diese in ihrem vorderen Bereich mit dem Ölkühler versehen ist, ergeben sich nur geringe Strömungswege für die aus dem Ölkühler austretende erwärmte Luft. Weiterhin ist es möglich, den Ölkühler nahe am Entstehungsort des heißen Öls anzuordnen. Dies führt zu einem kompakten Aufbau der erfindungsgemäßen Triebwerksgondel.

Ein weiterer Vorteil des kompakten Aufbaus besteht darin, dass dieser nicht für Vogelschlag anfällig ist, da keine zusätzlichen exponierten Maßnahmen zur Enteisung vorgesehen werden müssen.

Die erfindungsgemäß aus dem Ölkühler austretende Luftströmung wird durch den Druckunterschied zwischen dem Staudruck der dem Ölkühler zugeführten Außenluft und dem statischen Druck im Bereich des Luftaustritts bewegt und angetrieben, so dass eine zuverlässige Durchströmung sichergestellt ist.

Weiterhin ist es erfindungsgemäß auf besonders einfache Weise möglich, die Luftaustrittsströmung strömungstechnisch zu optimieren und gegebenenfalls den Flugbedingungen anzupassen, beispielsweise durch Auslassklappen oder ähnliches.

Um auch bei niedrigen Anströmgeschwindigkeiten, wie beispielsweise beim Rollen eines Flugzeuges, eine ausreichende Enteisungsfunktion sicherzustellen, kann es günstig sein, wenn der Luftkanal zusätzlich mit einer Zuführleitung für Verdichterluft (Zapfluft) verbindbar ist. Diese kann bevorzugterweise durch eine Düse ausströmen. Somit kann heiße Zapfluft bei Bedarf zusätzlich zugeführt werden.

Ein weiterer Vorteil der Erfindung besteht darin, dass diese die große Wärmemenge nutzt, welche von dem Ölkühler abgegeben wird, beispielsweise 100 kW. Die aus dem Ölkühler austretende Luft weist jedoch nicht sehr hohe Temperaturen auf, sondern beispielsweise Maximaltemperaturen von 120°C. Die Gesamtstruktur wird somit hinsichtlich der Materialien nicht negativ beeinträchtigt, so dass insbesondere auch Aluminiumlegierungen verwendet werden können, die damit eine fast unbegrenzte Lebensdauer haben können. Bei der ausschließlichen Verwendung von Zapfluft gemäß dem Stand der Technik ist die Temperaturbelastung weitaus höher, beispielsweise 10 mal höher, wodurch sich erhebliche Alterungsprobleme und Materialprobleme ergeben können.

Erfindungsgemäß ergibt sich weiterhin der Vorteil, dass durch die kompakte Ausgestaltung der erfindungsgemäßen Triebwerksgondel die Anströmfläche minimiert werden kann, so dass sich insgesamt günstige Strömungsverhältnisse ergeben. Hierbei ist es vorteilhaft, wenn der Ölkühler im Wesentlichen an der Oberseite der Triebwerksgondel angeordnet ist und/oder wenn an der Oberfläche der Triebwerksgondel, in Strömungsrichtung von der Einlaufebene des Triebwerks zurückversetzt, ein Kühllufteinlass für den Ölkühler angeordnet ist.

Die Erfindung schafft somit auch eine Lösung für eine an anderer Stelle eines Flugzeugs einsetzbare Flugzeugenteisungsvorrichtung, beispielsweise zum Enteisen von Pylonen oder Tragflächen. Auch hierbei ist es möglich, die aus zumindest einem Ölkühler austretende Kühlluft zur Erwärmung des jeweiligen Bauteils und somit zur Enteisung zu verwenden.

Im Folgenden wird die Erfindung anhand eines Ausführungsbeispiels in Verbindung mit der Zeichnung beschrieben. Dabei zeigt:
- Fig. 1: eine schematische, vereinfachte Axial-Schnittansicht einer Triebwerksgondel eines Turboprop-Triebwerks,
- Fig. 2: eine vergrößerte Darstellung des Details C gemäß Fig. 1, und
- Fig. 3: eine vergrößerte Darstellung des Details D gemäß Fig. 1.

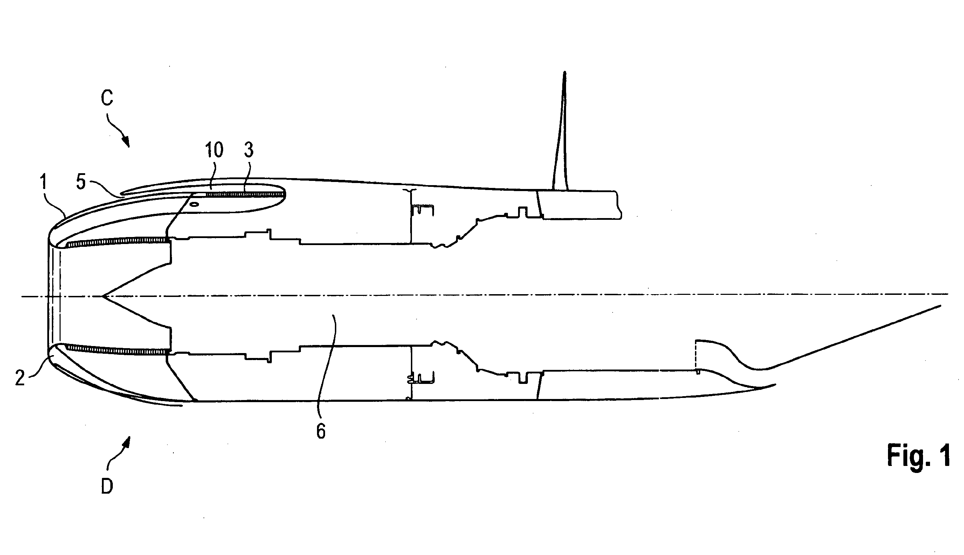

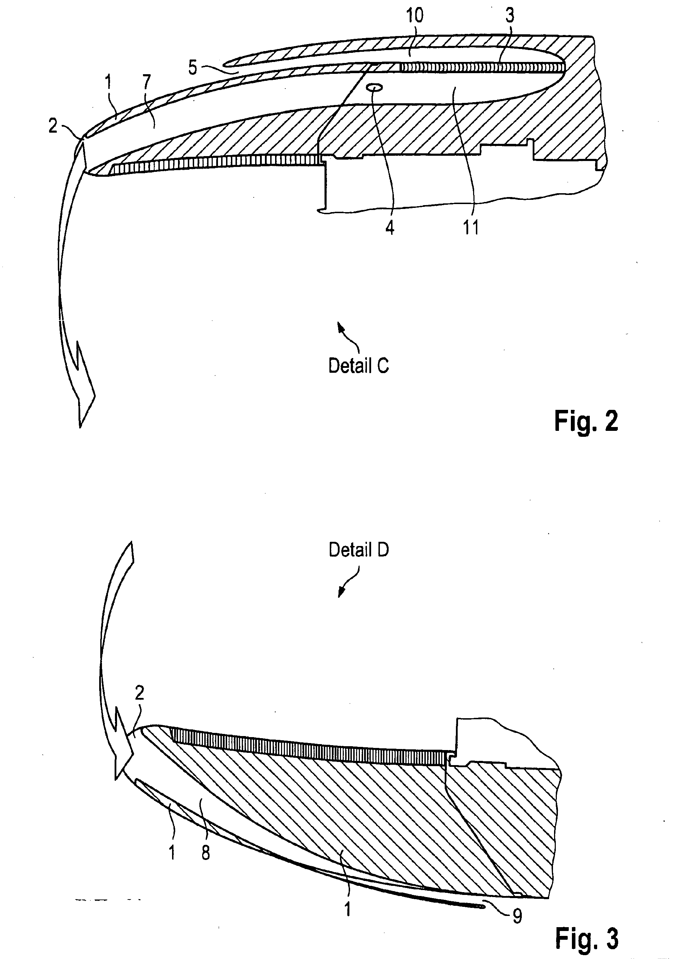

Erfindungsgemäß ist eine in üblicher Weise ausgebildete Triebwerksgondel 1 vorgesehen, in welcher eine üblich ausgestaltete Fluggasturbine 6 angeordnet ist. Die Triebwerksgondel 1 weist an ihrem Einströmbereich (von links gemäß Fig. 1) einen geschlossenen, ringförmigen Luftkanal 2 auf, welcher mit einem oberen Einströmkanal 7 verbunden ist (siehe Fig. 2). Die Luftströmung strömt somit durch den Einströmkanal 7 in den ringförmigen Luftkanal 2 und verlässt diesen durch einen unteren Ausströmkanal 8, welcher konvergent ausgebildet sein kann und in einen Auslass 9 endet (siehe Fig. 3). Der Auslass 9 kann zusätzlich zur Strömungsoptimierung verstellbar sein, beispielsweise mittels Klappen.

Wie in Fig. 2 dargestellt, ist in Strömungsrichtung im Einlaufbereich des Einströmkanals 7 ein Ölkühler 3 angeordnet, durch welchen heißes Triebwerksöl geleitet wird. Umgebungsluft wird über einen an der Triebwerksgondel 1 oben liegenden Kühllufteinlass 5 in einen Zuströmkanal 10 und nachfolgend dem Ölkühler 3 zugeführt. Der Zuströmkanal 10 kann als Difusor ausgebildet sein. Der Einströmkanal 7 kann nach dem Austritt des Ölkühlers 3 als konvergenter Kanal 11 ausgebildet werden.

Weiterhin ist im Bereich des Einströmkanals 7 eine Düse 4 vorgesehen, durch welche bei geringen Geschwindigkeiten eines Luftfahrzeuges, beispielsweise beim Rollen, zusätzlich Zapfluft aus dem Hochdruckverdichter zugeführt werden kann.

Erfindungsgemäß durchströmt somit ein großes Volumen an Luft mit relativ geringer Temperatur den ringförmigen Luftkanal 2. Dies steht im Gegensatz zu den Lösungen des Standes der Technik, bei welchen ein geringes Luftvolumen an Zapfluft (Bleed Air) mit relativ hoher Temperatur durch den ringförmigen Kanal 2 geleitet wird. Erfindungsgemäß ergibt sich somit durch die geringere Temperaturbelastung eine erhebliche Erhöhung der Lebensdauer der Komponenten.

### Bezugszeichenliste

- 1: Triebwerksgondel
- 2: ringförmiger Luftraum
- 3: Ölkühler
- 4: Düse
- 5: Kühllufteinlass
- 6: Fluggasturbine
- 7: Einströmkanal
- 8: Ausströmkanal
- 9: Auslass
- 10: Zuströmkanal
- 11: konvergenter Kanal

## Patentansprüche

1. Triebwerksgondel für eine Fluggasturbine mit einer Enteisungsvorrichtung, wobei die Triebwerksgondel (1) am vorderen Anströmbereich mit einem geschlossenen ringförmigen Luftkanal (2) versehen ist, in welchen erwärmte Luft eingeleitet wird, wobei in der Triebwerksgondel (1) zumindest ein an der Oberseite der Triebwerksgondel (1) angeordneter Ölkühler (3) angeordnet ist, welchem Triebwerksöl zugeführt wird, und welcher mit Umgebungsluft beaufschlagt wird, wobei die aus dem Ölkühler (3) austretende Luftströmung durch einen oberen Einströmkanal (7) und den Luftkanal (2) geleitet und durch einen unteren Ausströmkanal (8) abgeleitet wird.

2. Triebwerksgondel nach Anspruch 1, **dadurch gekennzeichnet, dass** der Luftkanal (2) mit einer Zuführleitung für Verdichterluft verbindbar ist.

3. Triebwerksgondel nach Anspruch 2, **dadurch gekennzeichnet, dass** die Zuführleitung in einer Düse (4) mündet.

4. Triebwerksgondel nach einem der Ansprüche 1 bis 3, **dadurch gekennzeichnet, dass** an der Oberfläche der Triebwerksgondel (1) in Strömungsrichtung von der Einlaufebene des Triebwerks zurückversetzt, ein Kühllufteinlass (5) für den Ölkühler (3) angeordnet ist.

## Claims

1. Engine nacelle for an aircraft gas turbine including a de-icing device, with the engine nacelle (1) in the front inflow area being provided with a closed annular air duct (2), into which heated air is introduced, with at least one oil cooler (3) provided in the upper part of the engine nacelle (1) being arranged in the engine nacelle (1), to which engine oil is fed and which is supplied with ambient air, with the airflow leaving the oil cooler (3) being passed through an upper inflow duct (7) and the air duct (2) and discharged through a lower outflow duct (8).

2. Engine nacelle in accordance with Claim 1, **characterized in that** the air duct (2) is connectable to a supply line for compressor air.

3. Engine nacelle in accordance with Claim 2, **characterized in that** the supply line issues into a nozzle (4).

4. Engine nacelle in accordance with one of the Claims 1 to 3, **characterized in that** at the upper surface of the engine nacelle (1) at a location set back in the flow direction from the inlet plane of the engine, a cooling-air inlet (5) for the oil cooler (3) is arranged.

## Revendications

1. Nacelle de moteur pour une turbine à gaz aéronautique, comprenant un dégivreur, sachant que dans la zone d'afflux antérieure, la nacelle de moteur (1) est munie d'un canal d'air (2) annulaire fermé dans lequel est introduit de l'air chauffé, et que dans la nacelle de moteur (1) est placé au moins un refroidisseur d'huile (3) disposé dans la partie supérieure de la nacelle de moteur (1), lequel est alimenté en huile du moteur et dans lequel est admis de l'air ambiant, le flux d'air sortant du refroidisseur d'huile (3) étant guidé à travers un canal d'admission supérieur (7) et le canal d'air (2), et évacué par un canal de sortie inférieur (8).

2. Nacelle de moteur selon la revendication n° 1, **caractérisée en ce que** le canal d'air (2) peut être relié à une conduite d'alimentation pour de l'air de compresseur.

3. Nacelle de moteur selon la revendication n° 2, **caractérisée en ce que** la conduite d'alimentation débouche dans une buse (4).

4. Nacelle de moteur selon une des revendications n° 1 à n° 3, **caractérisée en ce que** sur la face supérieure de la nacelle de moteur (1) est disposée une prise d'air de refroidissement (5) pour le refroidisseur d'huile (3) décalée vers l'arrière dans le sens d'écoulement par rapport au plan d'entrée du moteur.
